# EUROPEAN PATENT APPLICATION

(11) **EP 4 560 133 A1**
(43) Date of publication of application: **28.05.2025**
(21) Application number: 23211193.0
(22) Date of filing: 21.11.2023
(51) Int. Cl.: F03B 13/18, F03B 13/20

(54) **SYSTEM FOR GENERATING ELECTRICITY FROM NON-DIRECTIONAL WATER MOVEMENT**

(71) Applicant: International Business Exchange Services ELEG Energy, 1000 Bruxelles (BE)
(72) Inventor: WU, Ying-Ho, 1000 Brussels (BE); YANG, Yi-Bin, 1000 Brussels (BE)
(74) Representative: Calysta NV

(57) **Abstract**

A system (99, 199, 299) for generating electricity from water movement, comprising: a generator (3) configured to generate electricity, the generator comprising a stator (16) and a rotor (13), wherein the rotor is arranged around the stator, comprises a plurality of blades (21) extending radially outwards from an outer surface (13a) of the rotor, wherein the blades are configured to be moved by the water movement, wherein each blade: comprises a main body (11), comprises a first wing (10) extending from the main body at a first wing angle (101), comprises a second wing (12) extending from the main body at a second wing angle (121), wherein the first wing angle is different from the second wing angle.

## Description

The present invention relates to the field of renewable energy, in particular to generating electricity from water movement. The invention relates in particular to systems and methods that enable generating more electricity from non-directional water movement.

The need for renewable energy is well known by now. Different ways to generate electricity without generating greenhouse gasses are known, e.g. using solar, wind, or water as a source of renewable energy.

Tidal streams, e.g. in oceans, contain energy that can be used to drive a generator for generating electricity. Several systems for doing this are known, e.g. having axial (horizontal) turbines, cross flow turbines, vertical axis turbines, and oscillating generators. However, these systems are usually only functional for directional stream. Some systems allow to change the orientations of the blades when the direction of the stream changes, similar to the principles applied to wind turbines.

Non-direction streams are present on many locations in the oceans, but also in other water bodies such as lakes. The kinetic energy in such stream could be a source of renewable energy, but with current systems it is not possible to (efficiently) convert this to electricity.

It is an object of the invention to overcome the disadvantages of the prior art, or at least provide an alternative to the prior art. It is in particular an object of the invention to provide an improved solution for generating electricity from water movement, wherein in particular the water movement can be non-directional water movement.

This object is achieved with a system for generating electricity from water movement, comprising:
- a generator configured to generate electricity, the generator comprising a rotor, wherein the rotor
   - comprises a plurality of blades extending radially outwards from an outer surface of the rotor, wherein the blades are configured to be moved by the water movement, wherein each blade
      - comprises a main body,
      - comprises a first wing extending from the main body at a first wing angle,
      - comprises a second wing extending from the main body at a second wing angle,
   wherein optionally the first wing angle is different from the second wing angle.

Optionally, the generator comprises a stator, wherein the rotor is arranged around the stator.

The invention thus relates to system for generating electricity from water movement. The water movement can e.g. be non-directional water movement. Within this context, non-directional water movement refers to water movement that does not have a dominant component in a single direction. So, non-directional water movement does not include tidal streams. Non-directional water movement can e.g. include water movement in a back and forth direction, being of approximately equal amplitude in each direction.

The system comprises a generator. The generator may have a stator and a rotor. Generally, when the rotor is moved relative to the stator, electricity is generated. The stator and/or rotor may e.g. comprise one or more permanent magnets. The stator and/or rotor may e.g. comprise a plurality of poles. The poles may e.g. be insulated by one or two (short-circuited) coils.

The rotor is arranged around the stator, at least partially when seen in axial direction. Thus, the rotor is arranged radially outward of the stator. The rotor has a larger diameter than the stator. The stator may e.g. comprise an outer wall which faces an inner wall of the rotor. In at least a resting position, optionally the stator and rotor are coaxial. It is possible that one of the stator or rotor is larger than the other when seen in axial direction.

The rotor is configured to be rotated (e.g. around the stator). The movement of (electro)magnetic components in the rotor relative to (electro)magnetic components in the stator will cause changes in the electromagnetic field, and thereby generate electricity. It will be understood that although broadly speaking a stator refers to a component being stationary and a rotor to a component being rotated, in the context of this invention both components may be moved slightly due to water movement. However, the rotor is generally rotated around the stator to generate the electricity.

The rotor comprises a plurality of blades. The blades extend radially outward from an outer surface of the rotor. The blades come into contact with the water, and when the water is moving a force is exerted onto the blades. This force generates a torque, which causes rotation of the rotor. As such, electricity can be generated.

Optionally, the blades are distributed equally over the outer surface of the rotor. The number of blades can depend on the size of the rotor, the expected force subjected onto the blades, and the required/desired torque for rotating the rotor. For example, the rotor can comprise three or more blades, e.g. four, five, six, seven, eight, nine, or ten blade.

Each blade comprises a main body. The main body extends from the outer surface until an outer end of said main body. The outer end e.g. has a main impact surface. The main impact surface is configured to generate a relatively large torque by the force it is subjected to, since it is at the furthers distance from the outer surface of the rotor. The main body can e.g. have an elongated shape. The main body can e.g. have a first side and a second side, being opposite of the first side. The main body can further have an upper side and bottom side. Although speaking of main impact surface in the singular form, it will be understood that the main impact surface can comprise a first surface on the first side of the main body, and a second surface on the second side of the main body.

Each blade further comprises a first wing and a second wing. Both the first and second wing extend from the main body. The first wing has e.g. an outer end with a first wing impacting surface, and the second wing has e.g. an outer end with a second wing impacting surface. The first and second wing can e.g. have an elongated shape. The first and second wing can e.g. have a first side and a second side, being opposite of the first side. The first and second wing can further have an upper side and bottom side. Although speaking of first and second impact surface, respectively, in the singular form, it will be understood that the first and second impact surface can each comprise a first surface on the first side of the respective wing, and a second surface on the second side of the respective wing.

The first wing extends from a first side surface of the main body, and the second wing extends from a second surface of the main body, wherein the first surface is opposite from the second surface. Thus, the first and second wing are arranged at opposite sides of the main body.

The first wing extends from the main body at a first wing angle, and the second wing at a second wing angle. The first and second wing angle can e.g. be defined as the most radial outward angle between the respective wing and the main body. The first and second wing angle can e.g. be defined as the smallest angle between the respective wing and the main body, wherein the first and second wing extend radially outward from the main body when seen in radial direction of the rotor.

The movement of the water will subject forces onto the main impact surface, the first wing impact surface, and the second wing impact surface. Each of these forces creates a torque, resulting in a combined blade torque. The combined blade torques of all of the blades combined, will cause the rotor to rotate.

In embodiments, the first angle is different from the second wing angle. This advantageously implies that the force subjected to the first wing impact surface is different than the force subjected to the second wing impact surface. The force subjected to the main impact surface is usually also different. Having these different forces, has the effect that the combined force (and thus combined torque) depends on the direction of the water movement. Thus, when water movement happens in a first direction, a first torque is subjected to the rotor. When the water moves in a second direction opposite of the first direction, a second torque is subjected to the rotor. The second torque is different in amplitude from the first torque, even if the movement in the first direction is equal in amplitude to the movement in the second direction. As such, a rotation of the rotor can be achieved, even in non-directional water movement.

It is noted that said first and second torque being different is not only relevant to avoid oscillating movement of the rotor instead of rotation. When there are a plurality of blades, usually there will be blades on both sides of the rotor. This means that when the water is moving in a given direction, this may be the experienced by a first blade as the first direction, but by a second blade (on opposite side of the first blade) as the opposite second direction. If the first and second blade would be subjected to a force/torque equal in amplitude but opposite in direction, these would cancel each other. It is therefore advantageous that, because of the different wing angles, said forces/torques are not equal in amplitude.

In embodiments, the first wing angle is larger than 45 degrees, and the second wing angle is smaller than 45 degrees. This may be particularly advantageous to achieve the technical effect of being subjected to different forces, depending on the direction of water movement. For example, the first wing angle may be between 15-40 degrees. For example, the second wing angle may be between 50-75 degrees.

In embodiments, the first wing angle is 30 degrees, and the second wing angle is 60 degrees. These has been found particularly advantageous combination of wing angles to achieve the technical effect of being subjected to different forces, depending on the direction of water movement.

In embodiments, the blade comprises a width, wherein at a contact surface between the blade and the outer surface of the rotor, the width extends at a blade angle relative to the outer surface when seen in an axial direction of the rotor, wherein the blade angle is between 30-60 degrees, e.g. 45 degrees. The blade is thus tilted, which may further improve the difference in torque depending in the direction of the water movement. During use, the axial direction of the rotor may extend in vertical direction.

The blade may further have a length and a thickness. The length may extend substantially in radial direction of the rotor. The thickness may be the smallest dimension of the blade, extending perpendicular to the length and width. The thickness may provide a distance between the first side (from which the first wing extends) and the second side (from which the second wing extends) of the blade.

In embodiments, the main body of the blade is twisted when seen in radial direction of the rotor. Twisted implies that the width direction of the main body is inconstant when seen in longitudinal (length) direction (and e.g. when seen in radial direction of the rotor). A twist angle can be defined, wherein the twist angle reflects the change in direction of the width direction. The twist angle may e.g. be up to 60 degrees. The twist angle may e.g. be 10-45 degrees, e.g. 15 degrees, or e.g. 30 degrees. These embodiments may further improve the difference in torque depending in the direction of the water movement. For example, at the outer end of the main body having the main impact surface, the width of the main body may extend in a direction closer to a vertical direction than at an outer end of the main body having a contact surface between the main body and the outer surface of the rotor.

In embodiments, the system further comprises a floating element, wherein the floating element is configured to float on the water, wherein the generator is connected to the floating element and is optionally configured to be arranged below the floating element when said floating element is floating.

The floating element advantageously ensures that the system remains close to the upper surface of the water (e.g. the seabed). This makes it easy to find and reach the system, e.g. when required for maintenance. Cost of installation and maintenance can as such be reduced. With the generator (and thus the blades) being arranged below the floating element, it can be ensured that the blades are submerged by the water. This is advantageous to ensure sufficient force is subjected to the blades by movement of the water.

In embodiments, the floating element is configured to receive a gas. The gas can e.g. be air. The gas can e.g. be an inert gas. The gas can e.g. be an environmentally friendly gas. The floating element can e.g. comprise one or more balloons.

In embodiments, the floating element comprises a gas impermeable outer surface. The outers surface is usually also water impermeable. In embodiments, the outer surface is made from a polymer, e.g. from Polyurethane.

In embodiments, the generator has a cylindrical shape. For example, the stator may have a cylindrical shape and the rotor may have an annular shape.

In embodiments, the generator has a saucer shape. This may be advantageous to reduce the effect of impact from a tidal stream.

In embodiments, the system further comprises an electricity storage device, configured to receive electricity from the generator and store said electricity. The electricity storage device can e.g. be used to accumulate electricity, until sufficient electricity is stored to allows further transmitting the electricity at high voltage. This may reduce the electrical losses.

In embodiments, the electricity storage device comprises one or more supercapacitors.

In embodiments, the electricity storage device comprises one or more batteries.

In embodiments, the system further comprises a resilient member, configured to bias the stator and/or the electricity storage device to a neutral position. The resilient member can e.g. comprise one or more springs. The resilient member biases one or more non-rotary components (i.e. components other than the rotor) to a neutral position. When said components are being rotated out of the neutral position, a biasing force exerted by the resilient member increases, thereby more strongly biasing the component to the neutral position. The resilient member thus aids in reducing rotational movement of the non-rotary components.

In embodiments, the system further comprises an electricity cable configured to guide the generated electricity to an onshore location. The electricity cable can e.g. be electrically connector to the generator and/or the electricity storage device. The electricity cable can e.g. be configured to guide the electricity to a main electricity cable, wherein the main electricity cable can guide electricity generated by a plurality of generators to an onshore location. The electricity cable can be configured to guide alternating current or direct current.

In embodiments wherein the system comprises the resilient member and the electricity cable, the electricity cable can extend through the resilient member. This helps positioning the electricity cable and avoiding that the cable becomes entangles, e.g. in the blades of the rotor.

In embodiments, the system further comprises a cage arranged around at least the blades of the rotor. The cage can e.g. be made of a suitable (non-corrosive) metal. The cage can e.g. comprise a plurality of (curved) vertical bars, and a plurality of (curved/circular) horizontal bars. The cage can be advantageous to protect blades from unwanted objects. For example, if objects such as garbage of algae would get stuck in the blades, this may affect the efficiency, or even make the generator non-functional.

In embodiments, the system further comprises a first waterproof bearing at a first side (e.g. an upper side) of the generator. Optionally, the system further comprises a second waterproof bearing at the second side (e.g. a bottom side) of generator. The bearings allow movement of the generator, in particular the rotor. To avoid water leaking into the generator and damaging the electrical components, the bearing is made waterproof.

In embodiments, the system further comprises a further sealing element around the first and/or second waterproof bearing. The further sealing element can be a suitable waterproof device. Having a double, redundant, waterproof sealing reduces the possibility of water leaking into the generator.

In embodiment, the system further comprises a cable configured to provide an anchor connection. The cable can e.g. be configured to be connected to the stator, generator, or electricity storage device on a first end, and to an anchor on a second end. The anchorcan be configured to be anchored to the seabed or a fixed element. As such, the position of the system is relatively fixed. The cable allows some movement but maintains the system within a known area. The cable can e.g. be a chain. The cable can e.g. be a rope.

The invention further relates to an electricity farm, comprising a plurality of systems according to any of the preceding claims, wherein the systems are physically connected to each other by one or more cables. The cables can e.g. be chains or ropes. The cables enable to keep the systems within a predetermined range of each other. It also allows to provide an anchor connection to only one or a few of the plurality of systems, instead of each system.

The invention further relates to a method for generating electricity. Features explained herein with reference to the system have the same meaning with respect to the method unless explicitly defined otherwise. Features explained with reference to the system can be applied mutatis mutandis to the method to achieve the similar advantages, and vice versa.

One or more objects of the invention can be achieved with a method for generating electricity, comprising a step of using a system or electricity farm according to any embodiments described herein.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
fig. 1a schematically shows a side view of a system for generating electricity in a first embodiment;
fig. 1b schematically illustrates a generator in top view;
fig. 1c schematically illustrates the generator in side view;
fig. 1d schematically illustrates a blade of the generator,
fig. 1e schematically illustrates the blade in a simplified top view;
fig. 1f schematically illustrates a contact surface between the blade and an outer surface of a rotor of the generator;
fig. 1g shows a lower part of the system;
fig. 2 schematically shows a system for generating electricity in a second embodiment;
fig. 3 schematically shows a system for generating electricity in a second embodiment.

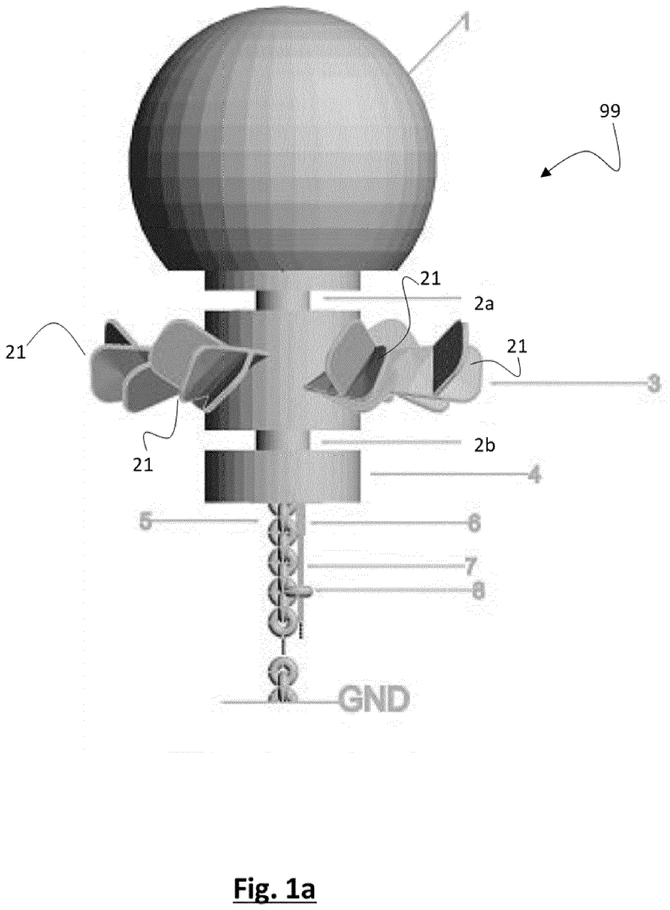

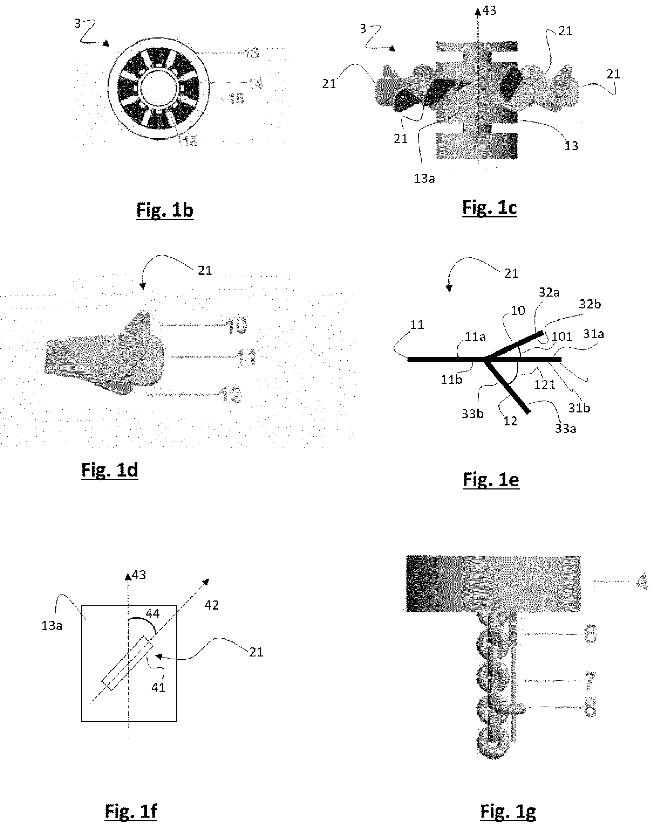

Fig 1a-1g schematically illustrate a system 99 for generating electricity in a first embodiment, wherein fig. 1a schematically shows a side view of the system 99, fig. 1b schematically illustrates a generator 3 in top view, fig. 1c schematically illustrates the generator 3 in side view; fig. 1d schematically illustrates a blade 21 of the generator, fig. 1e schematically illustrates the blade 21 in a simplified top view; fig. 1f schematically illustrates a contact surface 41 between the blade 21 and an outer surface 13 of a rotor 13 of the generator; fig. 1g shows a lower part of the system.

The system 99 comprises a generator 3 which is configured to generate electricity. The generator 3 comprises a plurality of blades 21. During use, the blades 21 are submerged in water and come into contact with the water. The movement of the water will cause the blades 21 to move, which in turn will cause a rotor 13 to move around a stator 16. As such, electricity can be generated.

Fig. 1b schematically illustrates the generator 3, showing that the rotor 13 surrounds the stator 16. The rotor 13 comprises a plurality of poles 14, in this case eight. Each pole 14 comprises two short-circuited coils 15. The stator 16 comprises a permanent magnet. It will be understood, however, that the stator 16 and rotor 13 can be embodied in many different suitable ways, which are known to the skilled person.

The rotor 13 and stator 16 comprise at least a radial direction and an axial direction. Normally the rotor 13 and stator 16 are coaxial, such that their axial directions coincide, and their radial directions are at least parallel. It can roughly be considered that, when arranged in the water, the axial direction extends in vertical direction and the radial direction extends in horizontal direction. For simplicity, reference may be made to vertical and horizontal direction herein accordingly. It will be understood, however, that during use the water movement will also tilt the system 99 slightly, such that this assumption is not completely accurate at every moment.

Fig. 1c illustrates the generators in side view, showing the rotor 13 and an outer surface 13a of the rotor 13. From this outer surface 13a, a plurality of blades 21 extend. The blades 21 extend radially outwards from the outer surface 13a.

Fig. 1d (side view) and fig. 1e (top view) illustrate a blade 21 in more detail. The blade comprises a main body 11. A first outer end of the main body 11 is connected to the outer surface 13a of the rotor 13. At a second outer end 11c, the main body comprises a main impact surface 31a, 31b (fig. 1e). The main impact surface 31a, 31b comprises a first surface 31a which is arranged at a first side 11a of the main body 11. The main impact surface 31a, 31b also comprises a second surface 31b which is arranged at a second side 11b of the main body 11.

During use, the entire blade 21 is in contact with the water. When the water is moving, a force is exerted onto the blade 21. The forces exerted onto the main impact surface 31a, 31b are located the furthest away from the rotor 13, and therefore generate to largest torque. Said torque will cause the rotor 13 to rotate relative to the stator 16 for generating electricity.

A first wing 10 extends from the main body 11, in particular from the first side 11a of the main body 11. At an outer end, the first wing 10 has a first wing impact surface 32a, 32b. The first wing impact surface 32a, 32b is subjected to forces by the water movement, for generating a torque. Said torque causes the rotor 13 to rotate relative to the stator 16.

Also a second wing 12 extends from the main body 11, in particular from the second side 11b of the main body 11. At an outer end, the second wing 12 has a second wing impact surface 33a, 33b. The second wing impact surface 33a, 33b is subjected to forces by the water movement, for generating a torque. Said torque causes the rotor 13 to rotate relative to the stator 16.

Fig. 1e illustrates that the first wing 10 extends at a first wing angle 101 from the main body 11. The first wing angle 101 is defined between the first side 11a of the main body 11 and the first wing 10. In particular, the first wing angle 101 is defined as the most radial outward angle (seen in radial direction of the rotor 13) between the first wing 10 and the main body 11. This is also the smallest angle between the first wing 10 and the main body 11, since the first wing 10 extends (at least partially) radially outward from the main body (seen in radial direction of the rotor 13). Similarly, the second wing 12 extends at a second wing angle 121 from the main body 11, which in this case is defined between the second side 11a of the main body 11 and the second wing 12.

It can be seen in fig. 1e that the first wing angle 101 is different from the second wing angle 121. In particular, the first wing angle 101 is 30 degrees, and the second wing angle 121 is 60 degrees. Although this has been found to be a particular configuration, it will be understood that also with different wing angle 101, 121, some of the advantages can be achieved. For example, one of the first and second wing angle 101. 121 can be larger than 45 degrees while the other is smaller than 45 degrees.

The first and second wing angle 101, 121 being different, has the advantageous effect that it allows to rotate the rotor 13 even when the movement of the water is non-directional. Non-directional movement of the water implies that the movement does not comprise a dominant direction in the movement. Non-directional movement can e.g. be a back and forward movement of the water, wherein the movement in the forward direction and the back direction are of approximately equal amplitude. Non-directional movement can e.g. be a random movement, e.g. statistically distributed with having approximately zero as average or expected value.

Such non-directional movement of the water comprises kinetic energy, but conventional generators with conventional blades do not allow to convert this to electricity. The blade 21 as shown in the figures allows to overcome this. The impact surfaces 31a,31b ; 32a,32b; 33a,33b are oriented at mutually different angles in the water. The different wing angles 101, 121 affect the (direction of the) forces subjected to the blade 21 by the water movement. This has the effect that the combined torque resulting from said forces depends on the direction of water movement. That is, when the water is moving in a first direction, the resulting torque will be different than when the water is moving in an opposite second direction, even if the movement in said first and second direction is equal in amplitude. As a result, the rotor 13 will be rotated even in non-directional water movement.

The main body 11 of the blade 21 has a generally elongated shape. It has a length extending in a length direction, which extends substantially in radial direction of the rotor 13. The length direction extends away from the outer surface 13a of the rotor 13. The main body further has a thickness extending in a thickness direction. The thickness is what separates the first side 11a from the second side 11b of the main body. The main body 11 has a width extending in a width direction. This is the third dimension of the main body 11, and generally the second largest.

It can be seen in fig. 1c that at the location where the blades 21 are attached to the outer surface 13a of the rotor 13, the said blades 21 extend in the width direction at a blade angle relative to an axial direction 43 of the rotor 13. This is schematically illustrated in more detail in fig. 1f.

In said fig. 1f, a contact surface 41 between the blade 21 and the outer surface 13a of the rotor 13 is illustrated. The width of the blade 21 extends in the width direction 42. A blade angle 44 is indicated, between the width direction 42 and the axial direction 43 of the rotor 13. The blade angle 44 is preferably between 30-60 degrees. In this example, the blade angle 44 is 45 degrees, which has been found to be particularly advantageous.

The contact surface 41 being arranged at the blade angle 44 relative to the outer surface 13a of the rotor 13 contributes to having a different resulting torque, depending on direction of water movement.

The main body 11 of the blade 21 can optionally be twisted when seen in radial direction of the rotor 13. This is best visible in fig. 1c. Twisted entails that the width direction extends in a different direction at the contact surface compared to the outer end (at the main impact surface 31a, 31b). In particular, closer to the outer end having the impact surface 31a, 31b, the width direction extends more in a vertical direction. This has the advantageous effect that the water movement will exert a larger force further radially outward. The further radially outward, the larger the resulting torque. In addition, the wings 10, 11 are present at the region where the largest forces are exerted by the water movement.

Having now discussed the fact that the (main body 11 of the) blades 21 are arranged at a blade angle 44 and being twisted, it will be understood that the top view in fig. 1e is simplified. Indeed, for the sake of clarity and simplicity, the blade angle 44 and twisting are not reflected in fig. 1e.

Fig. 1a illustrates that the system 99 comprises a floating element 1. The floating element 99 is in this example a balloon 1, being made from a polymer, e.g. from Polyurethane. A gas such as air can be provided inside the balloon 1. The balloon 1 floats on the water when the system 99 is arranged in the water. This makes it easier for maintenance personnel to find and grab the system 99.

The generator 3 is arranged below the balloon 1, during use when the balloon 1 is floating on the water. This ensures that the generator 3, in particular the blades 21, are submerged in the water.

The system 99 further comprises an electricity storage device 4, which in this example comprises one or more supercapacitors. The electricity storage device 4 is configured to store electricity, before said electricity is guided to e.g. an onshore location.

An electricity cable 7 is connected to the electricity storage device. Although not shown in the figures, it will be understood that the electricity cable 7 can be connected to an onshore location, or any other location to which the generated electricity is to be provided.

The electricity storage device 4 is arranged below the generator 3. This allows to arrange the electricity cable 7 further below the electricity storage device 4. This reduced the risk that the electricity cable 7 comes into contact with the blades 21 during use.

Visible in fig. 1a and the enlarged view in fig. 1g, is that the system 99 comprises a resilient member 6, in this case a spring 6. The spring 6 is connected to the electricity storage device 4. When the electricity storage device 4 is rotated, e.g. by water movement impacting on the electricity storage device 4, the spring 4 exerts a biasing force onto the electricity storage device 4. This biases the electricity storage device 4 towards a neutral position. As such, rotation of the electricity storage device 4 is reduced. It is also possible to connect the spring 6 to other components, e.g. the stator of the generator.

The electricity cable 7 extends through the spring 6. This can be advantageous to position the electricity cable 7 and avoid undesired movement of the electricity cable 7.

Fig. 1a shows that the system 99 comprises a cable 5, which in this example is embodied as a chain 5. The chain 5 is connected to the ground, as is schematically illustrated in fig. 1a. The chain 5 provides an anchor connection to the system 99, and thereby keeps the system in a predetermined area. The length of the chain 5 allows some movement of the system 99, but the anchor connection avoids that the system 99 can float away.

An electricity cable hook 8 is arranged on the chain 5. The electricity cable 7 is arranged through the electricity cable hook 8, to position the electricity cable 7 and avoid undesired movement of the electricity cable 7.

The system 99 further comprises a first waterproof bearing 2a arranged above the generators, and a second waterproof bearing 2b arranged below the generator 3. The bearings 2a, 2b allow the rotor 13 to rotate relative to the other components of the system 99, including the stator 16. Being waterproof avoids that water enters into the generators of electricity storage device 4, which could otherwise cause harm to the electronic components.

Although the figures only show a single system 99, it will be understood that it may be advantageous to provide an electricity farm having a plurality of such systems 99. In such an electricity farm, cables (e.g. chains) can be provided between the various systems 99 to physically connect them and keep them in a predetermined region. The chain 5 shown in fig. 1a can then e.g. be provided to only one or a few of the systems 99. In such an electricity farm, it is also possible that the electricity cables 7 of the various systems 99 are connected to each other or a main electricity cable.

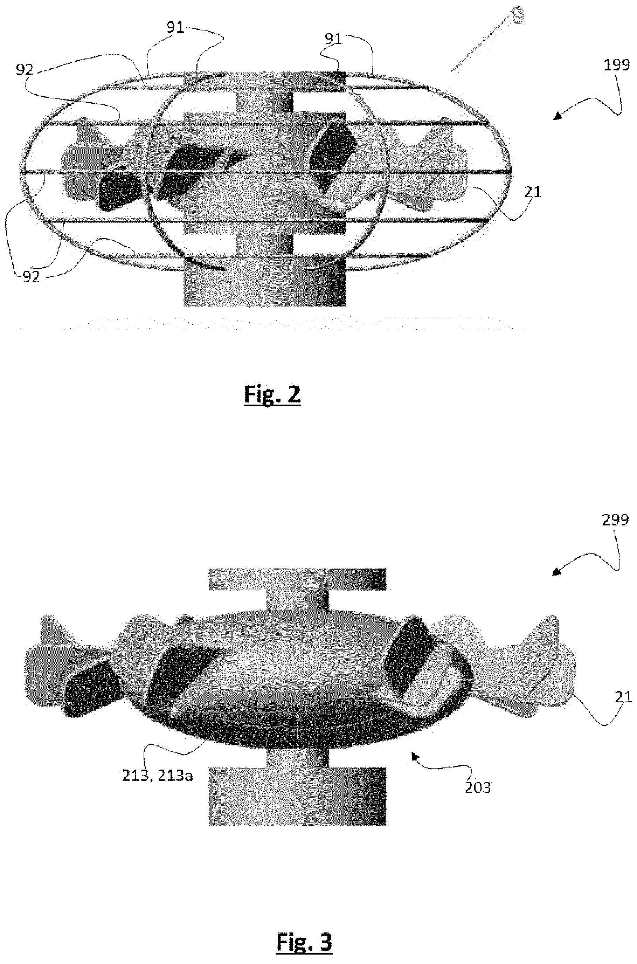

Fig. 2 illustrates a system 199 for generating electricity in a second embodiment. The system 199 may comprise similar features to the system 99 shown in the previous figures, which are not explicitly indicated or mentioned for the sake of efficiency.

The system 199 in fig. 2 comprises a cage 9. The cage 9 is arranged around the blades 21 of the rotor. This prevents that the blades 21 become entangles, e.g. with vegetation, garbage, or cables. The cage 9 comprises in particular a plurality of vertical bars 91 and a plurality of horizontal bars 92.

In the previous figures, the generator 3, in particular the rotor 13, has a cylindrical shape. Fig. 3 illustrates a system 299 for generating electricity in a third embodiment. In this embodiment, the generator 203, in particular the rotor 213, has a saucer shape. The saucer shape may be advantageous to reduce the effect of impact from tidal streams.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A system (99, 199, 299) for generating electricity from non-directional water movement, comprising:
• a generator (3) configured to generate electricity, the generator comprising a rotor (13), wherein the rotor
• comprises a plurality of blades (21) extending radially outwards from an outer surface (13a) of the rotor, wherein the blades are configured to be moved by the water movement, wherein each blade:
• comprises a main body (11),
• comprises a first wing (10) extending from the main body at a first wing angle (101),
• comprises a second wing (12) extending from the main body at a second wing angle (121),
wherein the first wing angle is different from the second wing angle.

2. The system according to claim 1, wherein the first wing angle is larger than 45 degrees, and the second wing angle is smaller than 45 degrees.

3. The system according to claim 1 or claim 2, wherein the first wing angle is 30 degrees, and the second wing angle is 60 degrees.

4. The system according to any of the preceding claims, wherein at a contact surface (41) between the blade and the outer surface of the rotor, the width (42) extends at a blade angle (44) relative to the outer surface when seen in an axial direction (43) of the rotor, wherein the blade angle is between 30-60 degrees, e.g. 45 degrees.

5. The system according to any of the preceding claims, wherein the main body of the blade is twisted when seen in radial direction of the rotor.

6. The system according to any of the preceding claims, wherein the system further comprises a floating element (1), wherein the floating element is configured to float on the water, wherein the generator is connected to the floating element and configured to be arranged below the floating element when said floating element is floating.

7. The system according to any of the preceding claims, wherein the generator has a cylindrical shape.

8. The system according to any of the preceding claims, wherein the generator has a saucer shape.

9. The system according to any of the preceding claims, wherein the system further comprises an electricity storage device (4), configured to receive electricity from the generator and store said electricity, wherein the electricity storage device comprises one or more supercapacitors.

10. The system according to any of the preceding claims, wherein the system further comprises a resilient member (6), configured to bias a stator and/or the electricity storage device to a neutral position.

11. The system according to claim 10, wherein the system further comprises an electricity cable (7) configured to guide the generated electricity to an onshore location,
wherein the electricity cable extends through the resilient member.

12. The system according to any of the preceding claims, wherein the system further comprises a cage (9) arranged around at least the blades of the rotor.

13. The system according to any of the preceding claims, wherein the system further comprises a cable (5) configured to provide an anchor connection.

14. An electricity farm comprising a plurality of systems according to any of the preceding claims, wherein the systems are physically connected to each other by one or more cables.

15. A method for generating electricity, comprising a step of using a system or electricity farm according to any of the preceding claims.
